# EUROPEAN PATENT APPLICATION

(11) **EP 4 672 372 A1**
(43) Date of publication of application: **31.12.2025**
(21) Application number: 23929119.8
(22) Date of filing: 27.03.2023
(51) Int. Cl.: H01M 4/505, H01M 4/525, H01M 4/58

(54) **POSITIVE ELECTRODE MATERIAL COMPOSITION, SECONDARY BATTERY, AND ELECTRIC DEVICE**

(71) Applicant: Contemporary Amperex Technology (Hong Kong) Limited, Hong Kong (HK)
(72) Inventor: QIN, Yiming, Ningde, Fujian 352100 (CN); SUN, Jingxuan, Ningde, Fujian 352100 (CN); XU, Xiaofu, Ningde, Fujian 352100 (CN); SHANG, Yibo, Ningde, Fujian 352100 (CN); PAN, Jianfu, Ningde, Fujian 352100 (CN); LIU, Qian, Ningde, Fujian 352100 (CN); YE, Yonghuang, Ningde, Fujian 352100 (CN)
(74) Representative: Lorenz Seidler Gossel Part. mbB
(86) International application number: PCT/CN2023/084067
(87) International publication number: WO 2024/197517

(57) **Abstract**

This application provides a positive electrode material composition, a secondary battery, and an electric apparatus. The positive electrode material composition includes a phosphate-based positive electrode material and a ternary positive electrode material, where a weight of the phosphate-based positive electrode material is denoted as W1; a weight of the ternary positive electrode material is denoted as W2; α=W1/(W1+W2), where 50%≤α≤97%, optionally 70%≤α≤90%; and the phosphate-based positive electrode material is a polycrystalline secondary sphere material and/or the ternary positive electrode material is a polycrystalline secondary sphere material. After the phosphate-based positive electrode material and the ternary positive electrode material are mixed, the advantages of the two materials complement each other. In addition, adjusting a ratio of the two materials can achieve a synergistic effect of the two materials, thereby allowing the positive electrode material composition to have the advantages of higher energy density and higher cycling performance. The phosphate-based positive electrode material and/or the ternary positive electrode material is in the form of polycrystalline secondary spheres, which makes full use of the advantage of low bulk diffusion impedance in the polycrystalline secondary spheres, thereby improving the charge capacity and low-temperature discharge capacity of the composition.

## Description

### TECHNICAL FIELD

This application relates to the field of battery technologies, and in particular, to a positive electrode material composition, a secondary battery, and an electric apparatus.

### BACKGROUND

A lithium-ion battery is a secondary battery (rechargeable battery) whose operation mainly relies on the migration of lithium ions between a positive electrode and a negative electrode. During charging and discharging, Li ions are intercalated and deintercalated back and forth between the two electrodes: during charging, Li ions are deintercalated from the positive electrode and intercalated into the negative electrode through an electrolyte, allowing the negative electrode to be in a lithium-rich state; and the opposite occurs during discharging.

Currently, there are various methods to improve the cycling performance of the lithium-ion battery, such as performing doping or coating modification on a positive electrode material to mitigate the degradation of a crystal structure of the positive electrode material during cycling, or combining positive electrode materials with different advantages to leverage their complementary advantages, thereby improving the cycling performance and energy density of the battery. For example, a lithium iron phosphate-based positive electrode material and a ternary positive electrode material are combined. However, although the combination of the two materials can improve the cycling capability or energy density of the battery to some extent, the charge capacity of the battery cannot be improved.

### SUMMARY

This application provides a positive electrode material composition, a secondary battery, and an electric apparatus to improve the fast-charging performance of the battery.

According to a first aspect of this application, a positive electrode material composition is provided, including a phosphate-based positive electrode material and a ternary positive electrode material, where a weight of the phosphate-based positive electrode material is denoted as W1; a weight of the ternary positive electrode material is denoted as W2; α=W1/(W1+W2), where 50%≤α≤97%, optionally 70%≤α≤90%; and the phosphate-based positive electrode material is a polycrystalline secondary sphere material and/or the ternary positive electrode material is a polycrystalline secondary sphere material.

With a phosphate polyanionic material, the phosphate-based positive electrode material has high stability, high cycling stability, and long service life. The ternary positive electrode material has a high energy density, but a layered transition metal oxide exhibits structural instability during cycling, leading to a shorter service life of the ternary positive electrode material than the phosphate-based positive electrode material. After the two materials are mixed, the high energy density of the ternary positive electrode material compensates for the defect of low energy density of the phosphate-based positive electrode material, and the advantage of high stability of the phosphate-based positive electrode material compensates for the defect of low structural stability of the ternary positive electrode material. In addition, adjusting a ratio of the two materials can achieve a synergistic effect of the two materials, thereby allowing the positive electrode material composition of this application to have the advantages of higher energy density and higher cycling performance. In addition, the phosphate-based positive electrode material and/or the ternary positive electrode material of this application is in the form of polycrystalline secondary spheres, which makes full use of the advantage of low bulk diffusion impedance in the polycrystalline secondary spheres, thereby improving the charge capacity and low-temperature discharge capacity of the composition.

In any embodiment of the first aspect, Dᵥ50 of the positive electrode material composition is greater than or equal to 8 µm; and optionally, a particle size distribution of the positive electrode material composition satisfies the following relational expression: 14>Aα+B(1-α)>7, where A represents Dᵥ50 of the phosphate-based positive electrode material, B represents Dᵥ50 of the ternary positive electrode material, and α represents a percentage of a lithium manganese iron phosphate positive electrode material. The particle size coordination effect between the phosphate-based positive electrode material and the ternary positive electrode material is further improved, thereby significantly improving the fast-charging capability and low-temperature discharge efficiency.

In any embodiment of the first aspect, a particle size of primary particles of the phosphate-based positive electrode material is 10-600 nm, optionally 35-110 nm. Selecting a phosphate-based positive electrode material with a nanoscale primary particle size can further improve the rate performance of the phosphate-based positive electrode material.

In any embodiment of the first aspect, optionally, a laser particle size Dᵥ50 of the phosphate-based positive electrode material is 7-30 µm, Dᵥ50 is optionally 8-14 µm, and Dᵥ90<30 µm. Selecting the laser particle size Dᵥ50 within the above range allows for more stable agglomeration of the primary particles, thereby further improving the structural stability of the phosphate-based positive electrode material.

In any embodiment of the first aspect, optionally, a BET specific surface area of the phosphate-based positive electrode material is 8-20 m²/g.

In any embodiment of the first aspect, optionally, a compacted density of the phosphate-based positive electrode material is 1.5-2.6 g/cm³, and the compacted density is optionally 2.15-2.5 g/cm³. Thus, the rate performance of the composition is further improved.

In any embodiment of the first aspect, optionally, a specific capacity of the phosphate-based positive electrode material at a rate of 0.1C is 140-165 mAh/g, optionally 155-160 mAh/g.

In any first embodiment of the first aspect, a chemical formula of the phosphate-based positive electrode material is Li₁₊ₓMn_{1-y}A_{y}P_{1-z}R_{z}O₄, where in the chemical formula, x is any value in a range of -0.100 to 0.100, y is any value in a range of 0.001 to 0.500, z is any value in a range of 0.001 to 0.100, and the values of x, y, and z satisfy the following condition: the chemical formula remains electrically neutral; A is one or more elements selected from Zn, Al, Na, K, Mg, Mo, W, Ti, V, Zr, Fe, Ni, Co, Ga, Sn, Sb, Nb, and Ge, optionally one or more elements selected from Fe, Ti, V, Ni, Co, and Mg; R is one or more elements selected from B, Si, N, S, F, Cl, and Br; and optionally, R is one element selected from B, Si, N, and S. Doping phosphate with element A and element E is conducive to improving the structural stability of the phosphate-based positive electrode material and the rate performance of a secondary battery with the phosphate-based positive electrode material.

In any first embodiment of the first aspect, the chemical formula of the phosphate-based positive electrode material is LiₐAₓMn_{1-y}B_{y}P_{1-z}C_{z}O₄₋ₙDₙ, where A includes one or more elements selected from a group consisting of Zn, Al, Na, K, Mg, Nb, Mo, and W; B includes one or more elements selected from a group consisting of Ti, V, Zr, Fe, Ni, Mg, Co, Ga, Sn, Sb, Nb, and Ge; C includes one or more elements selected from a group consisting of B (boron), S, Si, and N; D includes one or more elements selected from a group consisting of S, F, Cl, and Br; a is selected from a range of 0.9 to 1.1; x is selected from a range of 0.001 to 0.1; y is selected from a range of 0.001 to 0.5; z is selected from a range of 0.001 to 0.1; n is selected from a range of 0.001 to 0.1; and the phosphate-based positive electrode material is electrically neutral. Doping at the above four sites with the above specific elements simultaneously in specified amounts can significantly improve the rate performance, cycling performance, and/or high-temperature stability of the phosphate-based positive electrode material.

In any embodiment of the first aspect, optionally, the phosphate-based positive electrode material includes a polycrystalline core and a coating layer covering the polycrystalline core; the polycrystalline core has the chemical formula Li₁₊ₓMn_{1-y}A_{y}P_{1-z}R_{z}O₄ or the chemical formula LiₐAₓMn_{1-y}B_{y}P_{1-z}C_{z}O₄₋ₙDₙ; and the coating layer optionally includes one or more of a pyrophosphate layer, a phosphate layer, and a carbon layer. The above coating layer can effectively suppress the dissolution of transition metals and reduce side reactions on the surface of the phosphate-based positive electrode material.

In any embodiment of the first aspect, Dᵥ50 of the ternary positive electrode material is 5-11 µm, and Dᵥ99≤30 µm; and optionally, an average particle size of primary particles of the ternary positive electrode material is 50-800 nm. The ternary material made into secondary particles can further shorten lithium-ion diffusion paths and reduce bulk diffusion impedance.

In any embodiment of the first aspect, a BET specific surface area of the ternary positive electrode material is 0.2-1.2 m²/g. For the ternary material with the BET specific surface area within the above range, the compactness of secondary particles is controlled, so that a compacted density is increased, thereby increasing the energy density of the material.

In any embodiment of the first aspect, the ternary positive electrode material is an NCM ternary positive electrode material or an NCA ternary positive electrode material; optionally, a molar percentage of Ni in the ternary positive electrode material is 50%-75%, and a molar percentage of Co is 0.5%-49.5%; and further optionally, the molar percentage of Ni is 50%-70%, and the molar percentage of Co is 5%-35%. The molar percentage of Ni affects the capacity utilization of the ternary positive electrode material and significantly affects the increase of the energy density of a mixed material. The molar percentage of Co improves the electronic conductivity and ionic conductivity of a system and can effectively improve the charge capacity of the ternary positive electrode material.

In any embodiment of the first aspect, the ternary positive electrode material has a chemical formula Li_{a'}Ni_{b'}Co_{c'}M1_{d'}M2_{e'}O_{f'}R'_{g'}, where 0.75≤a'≤1.2, 0<b'<1, 0<c'<1, 0<d'<1, 0≤e'≤0.2, 1≤f'≤2.5, 0≤g'≤1, and f'+g'≤3; M1 is Mn and/or Al; M2 is one or more elements selected from Zr, Zn, Cu, Cr, Mg, Fe, V, Ti, Sr, Sb, Y, W, and Nb; and R' is one or more elements selected from N, F, S, and Cl. The element doping manner used can improve the cycling performance and rate performance of the ternary positive electrode material.

According to a second aspect of this application, a secondary battery is provided. The secondary battery includes a positive electrode plate, where the positive electrode plate includes a positive electrode active material. The positive electrode active material is any positive electrode material composition of the first aspect. The secondary battery with the positive electrode material composition of this application has effectively improved charge capacity and low-temperature discharge capacity while having high energy density and cycling performance.

According to a third aspect of this application, an electric apparatus is provided, including the secondary battery, where the secondary battery is the secondary battery of the second aspect. The electric apparatus has better operating stability at low temperatures.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skill in the art may still derive other drawings from the accompanying drawings without creative efforts.
FIG. 1 is a schematic diagram of a secondary battery according to an embodiment of this application.
FIG. 2 is an exploded view of the secondary battery according to the embodiment of this application in FIG. 1.
FIG. 3 is a schematic diagram of a battery module according to an embodiment of this application.
FIG. 4 is a schematic diagram of a battery pack according to an embodiment of this application.
FIG. 5 is an exploded view of the battery pack according to the embodiment of this application in FIG. 4.
FIG. 6 is a schematic diagram of an electric apparatus using a secondary battery as a power source according to an embodiment of this application.

The accompanying drawings are not drawn to scale.

Description of reference signs:
1. battery pack; 2. upper box body; 3. lower box body; 4. battery module; 5. secondary battery; 51. housing; 52. electrode assembly; and 53. top cover assembly.

### DESCRIPTION OF EMBODIMENTS

The following further describes the embodiments of this application in detail with reference to the accompanying drawings and embodiments. The following detailed description of the embodiments and the accompanying drawings are intended to illustrate the principle of this application, rather than to limit the scope of this application, meaning this application is not limited to the embodiments described herein.

Embodiments that specifically disclose a positive electrode material composition, a secondary battery, and an electric apparatus in this application are described in detail below with reference to the accompanying drawings as appropriate. However, there may be cases where unnecessary detailed descriptions are omitted. For example, detailed descriptions of well-known matters and repeated descriptions of actually identical structures have been omitted. This is to avoid unnecessarily prolonging the following descriptions, for ease of understanding by persons skilled in the art. In addition, the accompanying drawings and the following descriptions are provided for persons skilled in the art to fully understand this application and are not intended to limit the subject described in the claims.

"Ranges" disclosed in this application are defined in the form of lower and upper limits. A given range is defined by one lower limit and one upper limit selected, where the selected lower and upper limits define boundaries of that particular range. Ranges defined in this way may or may not include end values, and any combination may be used, meaning that any lower limit may be combined with any upper limit to form a range. For example, if ranges of 60-120 and 80-110 are provided for a specific parameter, it is understood that ranges of 60-110 and 80-120 can also be envisioned. In addition, if lower limit values of a range are given as 1 and 2, and upper limit values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise stated, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

### [Secondary battery]

A secondary battery, also referred to as a rechargeable battery or a storage battery, is a battery whose active material can be activated for continuous use through charging after the battery is discharged.

Typically, the secondary battery includes a positive electrode plate, a negative electrode plate, a separator, and an electrolyte. During charging and discharging of the battery, active ions (for example, lithium ions) are intercalated and deintercalated back and forth between the positive electrode plate and the negative electrode plate. The separator is disposed between the positive electrode plate and the negative electrode plate to mainly prevent short circuits between positive and negative electrodes and to allow the active ions to pass through. The electrolyte is between the positive electrode plate and the negative electrode plate to mainly conduct the active ions.

### [Positive electrode material]

A typical embodiment of this application provides a positive electrode material composition including a phosphate-based positive electrode material and a ternary positive electrode material, where a weight of the phosphate-based positive electrode material is denoted as W1; a weight of the ternary positive electrode material is denoted as W2; α=W1/(W1+W2), where 50%≤α≤97%, optionally 70%≤α≤90%; and the phosphate-based positive electrode material is a polycrystalline secondary sphere material and/or the ternary positive electrode material is a polycrystalline secondary sphere material.

With a phosphate polyanionic material, the phosphate-based positive electrode material has high stability, high cycling stability, and long service life. The ternary positive electrode material has a high energy density, but a layered transition metal oxide exhibits structural instability during cycling, leading to a shorter service life of the ternary positive electrode material than the phosphate-based positive electrode material. After the two materials are mixed, the high energy density of the ternary positive electrode material compensates for the defect of low energy density of the phosphate-based positive electrode material, and the advantage of high stability of the phosphate-based positive electrode material compensates for the defect of low structural stability of the ternary positive electrode material. In addition, adjusting a ratio of the two materials can achieve a synergistic effect of the two materials, thereby allowing the positive electrode material composition of this application to have the advantages of higher energy density and higher cycling performance. In addition, the phosphate-based positive electrode material and/or the ternary positive electrode material of this application is in the form of polycrystalline secondary spheres, which makes full use of the advantage of low bulk diffusion impedance in the polycrystalline secondary spheres, thereby improving the charge capacity and low-temperature discharge capacity of the composition.

A positive electrode plate is cut using an argon ion polishing method, elemental analysis is performed on a cross section, and then percentages of main elements of a lithium manganese iron phosphate material are respectively compared with those of a ternary material. Then, corresponding weights are obtained based on the percentages.

In some embodiments, Dᵥ50 of the positive electrode material composition is greater than or equal to 8 µm; and optionally, a particle size distribution of the positive electrode material composition satisfies the following relational expression: 30>1/{Aα+B(1-α)}>7, where A represents Dᵥ50 of the phosphate-based positive electrode material, and B represents Dᵥ50 of the ternary positive electrode material. The particle size coordination effect between the phosphate-based positive electrode material and the ternary positive electrode material is further improved, thereby significantly improving the fast-charging capability and low-temperature discharge efficiency.

In some embodiments, a particle size of primary particles of the phosphate-based positive electrode material is 10-600 nm, optionally 35-110 nm. Selecting a phosphate-based positive electrode material with a nanoscale primary particle size can further improve the fast-charging capability and low-temperature discharge efficiency of the phosphate-based positive electrode material.

In some embodiments, optionally, a laser particle size Dᵥ50 of the phosphate-based positive electrode material is 7-30 µm, Dᵥ50 is optionally 8-14 µm, and Dᵥ90<30 µm. Selecting the laser particle size Dᵥ50 within the above range allows for more stable agglomeration of primary particles, further improving the structural stability of the phosphate-based positive electrode material, thereby further improving the cycling performance of the positive electrode material composition. The above laser particle size is a laser particle size of secondary spheres of the phosphate-based positive electrode material.

In some embodiments, optionally, a BET specific surface area of the phosphate-based positive electrode material is 8-20 m²/g. Thus, its cycling performance is further controlled within a desirable range.

In some embodiments, optionally, a compacted density of the phosphate-based positive electrode material is 1.5-2.6 g/cm³, and the compacted density is optionally 2.15-2.5 g/cm³. Thus, the rate performance of the composition is further improved.

In some embodiments, optionally, a specific capacity of the phosphate-based positive electrode material at a rate of 0.1C is 140-165 mAh/g, optionally 155-160 mAh/g.

In a first embodiment, a chemical formula of the phosphate-based positive electrode material is Li₁₊ₓMn_{1-y}A_{y}P_{1-z}R_{z}O₄, where in the chemical formula, x is any value in a range of -0.100 to 0.100, y is any value in a range of 0.001 to 0.500, z is any value in a range of 0.001 to 0.100, and the values of x, y, and z satisfy the following condition: the chemical formula remains electrically neutral; A is one or more elements selected from Zn, Al, Na, K, Mg, Mo, W, Ti, V, Zr, Fe, Ni, Co, Ga, Sn, Sb, Nb, and Ge, optionally one or more elements selected from Fe, Ti, V, Ni, Co, and Mg; R is one or more elements selected from B, Si, N, S, F, Cl, and Br; and optionally, R is one element selected from B, Si, N, and S. The element A doped at the manganese site of lithium manganese phosphate helps to reduce a lattice change rate of lithium manganese phosphate during intercalation and deintercalation of lithium, improve the structural stability of a lithium manganese phosphate positive electrode material, significantly reduce the dissolution of manganese, and reduce the surface oxygen activity of particles. The element R doped at the phosphorus site helps to change the difficulty in changing the length of the Mn-O bond, thereby lowering a migration barrier of lithium ions, accelerating the migration of lithium ions, and improving the rate performance of the secondary battery.

In some embodiments, the chemical formula of the phosphate-based positive electrode material is LiₐAₓMn_{1-y}B_{y}P_{1-z}C_{z}O₄₋ₙDₙ, where A includes one or more elements selected from a group consisting of Zn, Al, Na, K, Mg, Nb, Mo, and W; B includes one or more elements selected from a group consisting of Ti, V, Zr, Fe, Ni, Mg, Co, Ga, Sn, Sb, Nb, and Ge; C includes one or more elements selected from a group consisting of B (boron), S, Si, and N; D includes one or more elements selected from a group consisting of S, F, Cl, and Br; a is selected from a range of 0.9 to 1.1, for example, 0.97, 0.977, 0.984, 0.988, 0.99, 0.991, 0.992, 0.993, 0.994, 0.995, 0.996, 0.997, 0.998, or 1.01; x is selected from a range of 0.001 to 0.1, for example, 0.001, 0.005, 0.01, 0.02, 0.03, 0.04, 0.05, 0.06, 0.07, 0.08, 0.09, or 0.1; y is selected from a range of 0.001 to 0.5, for example, 0.001, 0.005, 0.02, 0.05, 0.1, 0.15, 0.2, 0.25, 0.3, 0.34, 0.345, 0.349, 0.35, 0.4, or 0.5; z is selected from a range of 0.001 to 0.1, for example, 0.001, 0.005, 0.08, or 0.1; n is selected from a range of 0.001 to 0.1, for example, 0.001, 0.005, 0.08, or 0.1; and the phosphate-based positive electrode material is electrically neutral. A, B, C, and D respectively represent elements doped at the Li site, Mn site, P site, and O site of a compound LiMnPO₄. Without wishing to be constrained by the theory, it is currently believed that the performance improvement of the phosphate-based positive electrode material is related to the reduction in a lattice change rate of the phosphate-based positive electrode material during intercalation and deintercalation of lithium and the reduction in the surface activity. Reducing the lattice change rate can reduce the difference of lattice constants between two phases at a crystal boundary, reduce the interfacial stress, and enhance transport capability of Li+ at the interface, thereby improving the rate performance of a positive electrode active material. In addition, a high surface activity easily leads to serious interfacial side reactions, exacerbating gas production, electrolyte consumption, and damage to the interface, thereby affecting the performance of the battery in terms of cycling and the like. In the above phosphate-based positive electrode material, the lattice change rate is reduced through doping at the Li site and the Mn site. Doping at the Mn site also effectively reduces the surface activity, thereby suppressing Mn dissolution and the interfacial side reactions between the positive electrode active material and the electrolyte. Doping at the P site accelerates a change rate of the length of the Mn-O bond and lowers a small polaron migration barrier of the material, thereby facilitating the electronic conductivity. Doping at the O site has a good effect on reducing the interfacial side reactions. Doping at the P site and the O site also affects the Mn dissolution in the antisite defects and kinetic performance. Therefore, doping reduces the concentration of the antisite defects in the material, improves the kinetic performance and the gram capacity of the material, and can also change the morphology of particles, thereby increasing the compacted density. The applicant has surprisingly found that doping at the Li site, Mn site, P site, and O site of the compound LiMnPO₄ with specific elements simultaneously in specified amounts can obtain significantly improved rate performance, significantly reduce the dissolution of Mn and the element doped at the Mn site, obtain significantly improved cycling performance and/or high-temperature stability, and increase the gram capacity and compacted density of the material.

In some embodiments, optionally, the phosphate-based positive electrode material includes a polycrystalline core and a coating layer covering the polycrystalline core, where the polycrystalline core has a chemical formula of Li₁₊ₓMn_{1-y}A_{y}P_{1-z}R_{z}O₄, and the coating layer optionally includes one or more of a pyrophosphate layer, a phosphate layer, or a carbon layer. Since transition metal has a high migration barrier in pyrophosphate (higher than 1 eV), the dissolution of the transition metal can be effectively suppressed. In addition, phosphate exhibits excellent lithium-ion conductivity and can reduce the amount of lithium impurities on the surface. The carbon layer can effectively improve the conductivity and desolvation capability of LiMnPO₄, act as a "barrier" to further hinder the migration of manganese ions into the electrolyte, and reduce the corrosion of the active material by the electrolyte. In addition, the carbon layer in the mixture can also optimize a conductive network around the ternary positive electrode material, and improve the mixing uniformity of the phosphate-based positive electrode material and the ternary positive electrode material.

In some embodiments, Dᵥ50 of the ternary positive electrode material is 5-11 µm, and Dᵥ99≤30 µm; and optionally, an average particle size of primary particles of the ternary positive electrode material is 50-800 nm. The ternary material made into secondary particles can further shorten lithium-ion diffusion paths and reduce bulk diffusion impedance.

Typically, a specific surface area of secondary particles is larger than that of primary particles with the same particle size, so that interfacial side reactions of the secondary particles are severe, leading to the consumption of active lithium and a shorter battery life. To avoid the problems caused by the secondary particles, in some embodiments, a BET specific surface area of the ternary positive electrode material is 0.2-1.2 m²/g. The ternary material with the BET specific surface area within the above range is selected, the compactness of secondary particles is controlled, so that a compacted density is increased, thereby increasing the energy density of the material.

In some embodiments, the ternary positive electrode material is an NCM ternary positive electrode material or an NCA ternary positive electrode material; optionally, a molar percentage of Ni in the ternary positive electrode material is 50%-75%, and a molar percentage of Co is 0.5%-49.5%; and further optionally, the molar percentage of Ni is 50%-70%, and the molar percentage of Co is 5%-35%. The molar percentage of Ni affects the capacity utilization of the ternary positive electrode material and significantly affects the increase of the energy density of a mixed material. The molar percentage of Co improves the electronic conductivity and ionic conductivity of a system and can effectively improve the kinetic performance of the ternary positive electrode material.

In some embodiments, the ternary positive electrode material has a chemical formula Li_{a'}Ni_{b'}Co_{c'}Ml_{d'}M2_{e'}O_{f'}R'_{g'}, where 0.75≤a'≤1.2, 0<b'<1, 0<c'<1, 0<d'<1, 0<e'<0.2, 1≤f'≤2.5, 0≤g'≤1, and f'+g'≤3; M1 is Mn and/or Al; M2 is one or more elements selected from Zr, Zn, Cu, Cr, Mg, Fe, V, Ti, Sr, Sb, Y, W, and Nb; and R' is one or more elements selected from N, F, S, and Cl. The element doping manner used can improve the cycling performance and rate performance of the ternary positive electrode material.

According to some embodiments of the present invention, a method for preparing the phosphate-based positive electrode material Li₁₊ₓMn_{1-y}A_{y}P_{1-z}R_{z}O₄ includes:
mixing and stirring a manganese source, a source of element A, and an acid in a container to obtain manganese salt particles doped with element A, where stirring is performed at a temperature of 20-120°C, optionally 25-80°C; and/or stirring is performed at 500-700 rpm for 60-420 minutes, optionally 120-360 minutes; and
mixing the manganese salt particles doped with element A with a lithium source, a phosphorus source, and a source of element R in a solvent to obtain a slurry, and then performing sintering in a protective atmosphere of inert gas to obtain lithium manganese phosphate doped with elements A and R, where the sintering step is performed at 1100-1250°C for 12-20 h.

According to some embodiments of the present invention, a method for preparing the phosphate-based positive electrode material LiₘAₓMn_{1-y}B_{y}P_{1-z}C_{z}O₄₋ₙDₙ includes:
dissolving and stirring a manganese source, a source of element B, and an acid in a solvent to produce a manganese salt suspension doped with element B, filtering the suspension, and drying the resulting filter cake to obtain a manganese salt doped with element B, where stirring is performed at a temperature in a range of 60-120°C, and/or stirring is performed at a stirring speed of 200-800 rpm;
adding a lithium source, a phosphorus source, a source of element A, a source of element C, a source of element D, a solvent, and the manganese salt doped with element B obtained in the previous step into a reaction vessel, then grinding and mixing to obtain a slurry;
transferring the slurry obtained in the previous step to a spray drying device for spray drying and granulation to obtain particles; and
sintering the particles obtained in the previous step to obtain LiₘAₓMn_{1-y}B_{y}P_{1-z}C_{z}O₄₋ₙDₙ, where sintering is performed at a temperature in a range of 1150-1250°C for 10-20 h.

If there is a coating layer, the coating layer is further formed by a sintering process. This can specifically refer to the prior art and is not further described in this application.

The manganese source, the A source, the lithium source, the M source, and the X source can be selected from corresponding water-soluble salts, such as chloride salts, sulfate salts, nitrate salts, and organic acid salts. The phosphorus source can be selected from a phosphoric acid, a phosphorous acid, a pyrophosphate acid, or corresponding salts. The ammonia source may be an ammonium salt.

The foregoing ternary positive electrode material can be prepared using methods commonly used in the art or use existing commercially available ternary materials in the art, such as a series of polycrystalline ternary positive electrode materials produced by Ningbo Ronbay New Energy Technology Co., Ltd. (referred to as Ronbay Technology in examples).

### [Positive electrode plate]

The positive electrode plate typically includes a positive electrode current collector and a positive electrode film layer disposed on at least one surface of the positive electrode current collector, and the positive electrode film layer includes a positive electrode active material.

For example, the positive electrode current collector includes two opposite surfaces in its thickness direction, and the positive electrode film layer is disposed on either or both of the two opposite surfaces of the positive electrode current collector.

In some embodiments, the positive electrode current collector may be a metal foil or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following manner: the constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

### [Negative electrode plate]

The negative electrode plate includes a negative electrode current collector and a negative electrode film layer disposed on at least one surface of the negative electrode current collector, and the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil or a composite current collector. For example, a copper foil may be used as the metal foil. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a well-known negative electrode active material used for a battery in the art. For example, the negative electrode active material may include at least one of the following materials: artificial graphite, natural graphite, soft carbon, hard carbon, a silicon-based material, a tin-based material, lithium titanate, and the like. The silicon-based material may be selected from at least one of elementary silicon, silicon-oxygen compound, silicon-carbon composite, silicon-nitrogen composite, and silicon alloy. The tin-based material may be selected from at least one of elementary tin, tin-oxygen compound, and tin alloy. However, this application is not limited to these materials, and may alternatively use other conventional materials that can be used as negative electrode active materials for batteries instead. One of these negative electrode active materials may be used alone, or two or more of them may be used in combination.

In some embodiments, the negative electrode film layer further optionally includes a binder. For example, the binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. For example, the conductive agent may be selected from at least one of superconducting carbon, acetylene black, carbon black, Ketjen black, carbon dots, carbon nanotubes, graphene, and carbon nanofiber.

In some embodiments, the negative electrode film layer further optionally includes other additives such as a thickener (for example, sodium carboxymethyl cellulose (CMC-Na)).

In some embodiments, the negative electrode plate may be prepared in the following manner: the constituents used for preparing the negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

### [Electrolyte]

The electrolyte conducts ions between the positive electrode plate and the negative electrode plate. The electrolyte is not limited to any specific type in this application, and may be selected based on needs. For example, the electrolyte may be in a liquid state, a gel state, or an all-solid state.

In some embodiments, the electrolyte is in a liquid state and includes an electrolytic salt and a solvent.

In some embodiments, the electrolytic salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte further optionally includes an additive. For example, the additive may include a negative electrode film-forming additive and a positive electrode film-forming additive, or may include an additive that can improve some performance of the battery, for example, an additive for improving overcharge performance of the battery and an additive for improving high-temperature performance or low-temperature performance of the battery.

### [Separator]

In some embodiments, the secondary battery further includes a separator. The separator is not limited to any particular type in this application, and may be any well-known porous separator with good chemical stability and mechanical stability.

In some embodiments, a material of the separator may be selected from at least one of glass fiber, non-woven fabric, polyethylene, polypropylene, and poly(vinylidene difluoride). The separator may be a single-layer film or a multi-layer composite film, which is not particularly limited. When the separator is a multi-layer composite film, all layers may be made of the same or different materials, which is not particularly limited.

In some embodiments, the positive electrode plate, the negative electrode plate, and the separator may be made into an electrode assembly through winding or lamination.

In some embodiments, the secondary battery may include an outer package. The outer package may be used for packaging the foregoing electrode assembly and electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic. As the plastic, polypropylene, polybutylene terephthalate, polybutylene succinate, and the like may be listed.

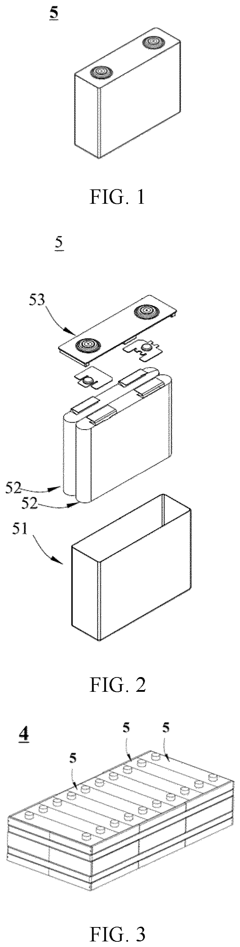

The secondary battery is not limited to any particular shape in this application, and may be cylindrical, rectangular, or of any other shapes. For example, FIG. 1 shows a secondary battery 5 of a rectangular structure as an example.

In some embodiments, referring to FIG. 2, the outer package may include a housing 51 and a cover plate 53. The housing 51 may include a base plate and side plates connected to the base plate, and the base plate and the side plates enclose an accommodating cavity. The housing 51 has an opening in communication with the accommodating cavity, and the cover plate 53 can cover the opening to close the accommodating cavity. A positive electrode plate, a negative electrode plate, and a separator may be made into an electrode assembly 52 through winding or lamination. The electrode assembly 52 is packaged in the accommodating cavity. The electrolyte infiltrates into the electrode assembly 52. The secondary battery 5 may include one or more electrode assemblies 52, and persons skilled in the art may make choices based on actual requirements.

In some embodiments, the secondary battery may be assembled into a battery module, and the battery module may include one or more secondary batteries. The specific quantity may be chosen by persons skilled in the art according to use and capacity of the battery module.

FIG. 3 shows a battery module 4 as an example. Referring to FIG. 3, in the battery module 4, a plurality of secondary batteries 5 may be sequentially arranged in a length direction of the battery module 4. Certainly, the secondary batteries may alternatively be arranged in any other manners. Further, the plurality of secondary batteries 5 may be fastened by fasteners.

Optionally, the battery module 4 may further include an enclosure with an accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art based on use and capacity of the battery pack.

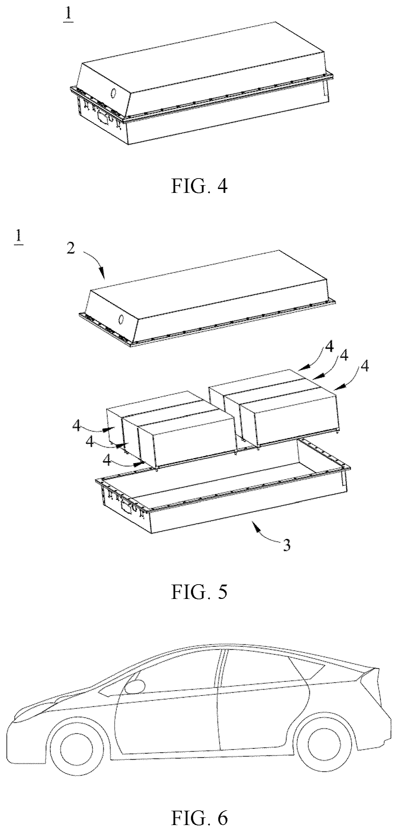

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, and the like, but is not limited thereto.

The secondary battery, the battery module, or the battery pack may be selected for the electric apparatus based on requirements for using the electric apparatus.

FIG. 6 shows an electric apparatus as an example. This electric apparatus is a battery electric vehicle, a hybrid electric vehicle, a plug-in hybrid electric vehicle, or the like. To satisfy requirements of the electric apparatus for high power and high energy density of the secondary battery, a battery pack or a battery module may be used.

### [Examples]

The following describes examples of this application. The examples described below are illustrative and only used to explain this application, and cannot be construed as limitations on this application. Examples whose technical solutions or conditions are not specified are made in accordance with technical solutions or conditions described in literature in the field, or made in accordance with product instructions. The reagents or instruments used are all conventional products that are commercially available if no manufacturer is indicated.

**In positive electrode material sources, the phosphate-based positive electrode material LiMn_{0.6}Fe_{0.4}PO₄ was purchased from Dynanonic, and the ternary positive electrode material was purchased from Ronbay Technology. Other positive electrode materials were prepared using the following method.**

### (1) Preparation of co-doped lithium manganese iron phosphate core

**Preparation of Fe, Co, and V co-doped manganese oxalate:** 689.5 g of manganese carbonate (calculated as MnCO₃, the same below), 455.2 g of ferrous carbonate (calculated as FeCO₃, the same below), 4.6 g of cobalt sulfate (calculated as CoSO₄, the same below), and 4.9 g of vanadium dichloride (calculated as VCl₂, the same below) were mixed well in a mixer for 6 hours. The resulting mixture was transferred to a reactor, and 5 liters of deionized water and 1260.6 g of oxalic acid dihydrate (calculated as C₂H₂O₄·2H₂O, the same below) were added. The reactor was heated to 80°C and stirred at a rotation speed of 600 rpm for 6 hours until the reaction ended (no bubble was generated), and an Fe, Co, V, and S co-doped manganese oxalate suspension was obtained. Then, the suspension was filtered, and the resulting filter cake was dried at 120°C and then milled using a jet mill, followed by grinding, classification, and sieving through a 325-mesh sieve, to obtain Fe, Co, and V co-doped manganese oxalate dihydrate particles.

**Preparation of Fe, Co, V, and S co-doped lithium manganese iron phosphate:** The manganese oxalate dihydrate particles (1793.4 g) obtained in the previous step, 369.0 g of lithium carbonate (calculated as Li₂CO₃, the same below), 1.6 g of dilute sulfuric acid at a concentration of 60% (calculated as 60% H₂SO₄, the same below), and 1148.9 g of ammonium dihydrogen phosphate (calculated as NH₄H₂PO₄, the same below) were added to 20 liters of deionized water, and the resulting mixture was stirred for 10 hours and mixed well to obtain a slurry. The slurry was transferred to a spray drying device for spray drying and granulation, with a drying temperature set to 250°C and a drying time set to 4 hours, to obtain powder. In a protective atmosphere with nitrogen (90% by volume)+hydrogen (10% by volume), the above powder was sintered at 1200°C for 16 hours to obtain 1572.1 g of Fe, Co, V, and S co-doped lithium manganese iron phosphate.

**Preparation example 2: Preparation of Li_{0.994}Mo_{0.001}Mn_{0.65}Fe_{0.35}P_{0.999}Si_{0.001}O_{3.999}F_{0.001}**

### (1) Preparation of positive electrode active material

**Preparation of doped manganese oxalate:** 1.3 mol of MnSO₄·H₂O and 0.7 mol of FeSO₄·H₂O were mixed well in a mixer for 6 hours. The resulting mixture was transferred to a reactor, and 10 L of deionized water and 2 mol of oxalic acid dihydrate (calculated as oxalic acid) were added. The reactor was heated to 80°C and stirred at a rotation speed of 600 rpm for 6 hours until the reaction ended (no bubble was generated), and an Fe-doped manganese oxalate suspension was obtained. Then, the suspension was filtered, and the resulting filter cake was dried at 120°C and then ground, classified, and sieved through a 325-mesh sieve. Then, the resulting product was ground to a target particle size based on the requirements, and Fe-doped manganese oxalate particles were obtained.

**Preparation of doped lithium manganese iron phosphate:** 1 mol of the manganese oxalate particles, 0.497 mol of lithium carbonate, 0.001 mol of Mo(SO₄)₃, an aqueous phosphoric acid solution containing 0.999 mol of phosphoric acid at a concentration of 85%, 0.001 mol of H₄SiO₄, 0.0005 mol of NH₄HF₂, and 0.005 mol of sucrose were added to 20 L of deionized water. The resulting mixture was transferred to a sand mill and fully ground and stirred for 10 hours to obtain a slurry. The slurry was transferred to a spray drying device for spray drying and granulation, with a drying temperature set to 250°C and a drying time set to 4 hours, to obtain particles. In a protective atmosphere with nitrogen (90% by volume)+hydrogen (10% by volume), the powder was sintered at 1150°C for 15 hours to obtain carbon-coated Li_{0.994}Mo_{0.001}Mn_{0.65}Fe_{0.35}P_{0.999}Si_{0.001}O_{3.999}F_{0.001}.

The particle size of primary particles, volume particle size distribution, and specific surface area of the obtained material were adjusted by adjusting the heating temperature of the reactor, the number of meshes of the sieve, and the sintering temperature in each of Preparation example 1 and Preparation example 2. The preparation process of each material was not described in detail in this application.

SEM was used to determine that the phosphate-based positive electrode material and ternary positive electrode material in each example were polycrystalline secondary spheres.

The particle sizes of the phosphate-based positive electrode material and ternary positive electrode material in each example were tested using a test of a laser particle size of powder: The test was performed in accordance with the national standard GB/T19077-2016, where deionized water was used as a solvent, and ultrasonic treatment were performed for 5 min before testing.

Test of specific surface area (BET) of powder: The test was performed in accordance with GB/T 19587-2004. Before testing, the powder was placed in a vacuum oven and dried at 200°C for more than 2 h. More than 20 g of the powder was weighed based on the required amount.

Test of primary particle size of powder: The primary particle size was determined by testing the powder using SEM.

Test of compacted density: 1.00±0.05 g of material powder was weighed, weight data M was recorded (in g), and all the powder was poured into a mold groove (with a groove area S=1.327 cm²). Another steel spacer was pressed with its flat side down onto the powder, and a steel column was pressed with its flat side down onto the spacer. A height of the steel column at that point was denoted as H0. After a pressure of 30000 N was applied and maintained for 30s, the pressure was removed. After waiting for 10s, a height H1 of the steel column was read. Compacted density=M/[(H1-H0)*S] (the compacted density of the phosphate-based positive electrode material is about 2.3 g/cm³).

Test of gram capacity: At a constant temperature of 25°C, each button battery prepared above was left standing for 5 min, and discharged to 2.5 V at 0.1C. Then, after left standing for 5 min, the battery was constant-voltage charged to 4.3 V or 4.25 V at a constant current of 0.1C (the percentage of Ni was greater than 70%, and an upper limit voltage was 4.25 V), then charged at a constant voltage of 4.3 V or 4.25 V until the current was less than or equal to 0.05 mA, and then left standing for 5 min. A charge capacity at that point was denoted as C0. Then, the battery was discharged to 2.5 V at 0.1C. A discharge capacity at that point was an initial discharge capacity denoted as D0.

The tested discharge capacity value (that was the initial discharge capacity D0) was divided by a mass of the positive electrode active material in the button battery to obtain a gram capacity of the positive electrode active material.

### ICP test of positive electrode plate

About 0.4 g of a dried positive electrode plate was taken, and 10 ml of aqua regia was added. Then, the resulting mixture was placed on an electric heating plate and heated to 180°C, and then left standing for 30 min. After digestion, the positive electrode plate was cooled to room temperature and then transferred to a 100 ml volumetric flask for dilution. 1 ml of a sample was diluted to 100 ml. Then, percentages of Ni, Co, and Mn were measured using a thermo device.

**The gram capacity, Dᵥ50, Dᵥ90, and BET specific surface area of each of the phosphate-based positive electrode materials and ternary positive electrode materials used in the examples were recorded in Table 1.**

**Table 1**

| No. | Material | Gram capacity (mAh/g) | Particle size of primary particles (nm) | Dᵥ50 (µm) | Dᵥ99 (µm) | BET (m²/g) |
|---|---|---|---|---|---|---|
| LMFP-1 | LiMn_{0.6}Fe_{0.4}PO₄ | 154 | 80.6 | 8.9 | 22 | 14 |
| LMFP-2 | Li_{0.999}Mn_{0.60}Fe_{0.40}P_{0.999}S_{0.001}O₄ | 155 | 81.4 | 7.2 | 22 | 14 |
| LMFP-3 | Li_{0.999}Mn_{0.60}Fe_{0.40}P_{0.999}S_{0.001}O₄ | 153 | 81.4 | 14 | 22 | 14 |
| LMFP-4 | Li_{0.999}Mn_{0.60}Fe_{0.40}P_{0.999}S_{0.001}O₄ | 147 | 84.3 | 58.5 | 22 | 14 |
| LMFP-5 | Li_{0.999}Mn_{0.60}Fe_{0.40}P_{0.999}S_{0.001}O₄ | 145 | 84.3 | 67.2 | 22 | 14 |
| LMFP-6 | Li_{0.999}Mn_{0.60}Fe_{0.40}P_{0.999}S_{0.001}O₄ | 147 | 84.3 | 5.1 | 17 | 14 |
| LMFP-7 | Li_{0.999}Mn_{0.60}Fe_{0.40}P_{0.999}S_{0.001}O₄ | 154 | 10.2 | 8.9 | 22 | 14 |
| LMFP-8 | Li_{0.999}Mn_{0.60}Fe_{0.40}P_{0.999}S_{0.001}O₄ | 154 | 35.4 | 8.9 | 22 | 14 |
| LMFP-9 | Li_{0.999}Mn_{0.60}Fe_{0.40}P_{0.999}S_{0.001}O₄ | 154 | 110 | 8.9 | 22 | 14 |
| LMFP-10 | Li_{0.999}Mn_{0.60}Fe_{0.40}P_{0.999}S_{0.001}O₄ | 154 | 300 | 8.9 | 22 | 14 |
| LMFP-11 | Li_{0.999}Mn_{0.60}Fe_{0.40}P_{0.999}S_{0.001}O₄ | 154 | 602.7 | 8.9 | 22 | 14 |
| LMFP-12 | Li_{0.999}Mn_{0.60}Fe_{0.40}P_{0.999}S_{0.001}O₄ | 154 | 800 | 8.9 | 22 | 14 |
| LMFP-13 | Li_{0.999}Mn_{0.60}Fe_{0.40}P_{0.999}S_{0.001}O₄ | 154 | 80.6 | 8.9 | 22 | 8 |
| LMFP-14 | Li_{0.999}Mn_{0.60}Fe_{0.40}P_{0.999}S_{0.001}O₄ | 154 | 80.2 | 8.9 | 22 | 19.8 |
| LMFP-15 | Li_{0.999}Mn_{0.60}Fe_{0.40}P_{0.999}S_{0.001}O₄ | 154 | 80.9 | 8.9 | 22 | 6.6 |
| LMFP-16 | Li_{0.999}Mn_{0.60}Fe_{0.40}P_{0.999}S_{0.001}O₄ | 154 | 80.0 | 8.9 | 22 | 23.9 |
| LMFP-17 | Li_{0.999}Mn_{0.60}Fe_{0.40}P_{0.999}S_{0.001}O₄ | 154 | 80.6 | 8.9 | 22 | 14 |
| LMFP-18 | Li_{0.993}Nb_{0.001}Mn_{0.65}Fe_{0.345} V_{0.005}P_{0.999}S_{0.001}O_{3.999}F_{0.001} | 154 | 80.0 | 8.9 | 22 | 14 |
| NCM-1 | LiNi_{0.65}Co_{0.07}Mn_{0.28}O₂ | 195 | 600 | 8.3 | 22 | 0.55 |
| NCM-2 | LiNi_{0.65}Co_{0.07}Mn_{0.28}O₂ | 195 | 600 | 5 | 22 | 0.55 |
| NCM-3 | LiNi_{0.65}Co_{0.07}Mn_{0.28}O₂ | 195 | 600 | 11.2 | 22 | 0.55 |
| NCM-4 | LiNi_{0.65}Co_{0.07}Mn_{0.28}O₂ | 195 | 600 | 14.6 | 22 | 0.55 |
| NCM-5 | LiNi_{0.65}Co_{0.07}Mn_{0.28}O₂ | 195 | 600 | 4.3 | 22 | 0.55 |
| NCM-6 | LiNi_{0.33}Co_{0.33}Mn_{0.34}O₂ | 163 | 600 | 8.3 | 22 | 0.55 |
| NCM-7 | LiNi_{0.50}Co_{0.35}Mn_{0.15}O₂ | 182 | 600 | 8.3 | 22 | 0.55 |
| NCM-8 | LiNi_{0.60}Co_{0.2}Mn_{0.2}O₂ | 189 | 600 | 8.3 | 22 | 0.55 |
| NCM-9 | LiNi_{0.70}Co_{0.05}Mn_{0.25}O₂ | 200 | 600 | 8.3 | 22 | 0.55 |
| NCM-10 | LiNi_{0.75}Co_{0.05}Mn_{0.20}O₂ | 205 | 600 | 8.3 | 22 | 0.55 |
| NCM-11 | LiNi_{0.87}Co_{0.005}Mn_{0.125}O₂ | 210 | 600 | 8.3 | 22 | 0.55 |
| NCM-12 | LiNi_{0.405}Co_{0.495}Mn_{0.1}O₂ | 191 | 600 | 8.3 | 22 | 0.55 |
| NCM-13 | LiNi_{0.40}Co_{0.55}Mn_{0.05}O₂ | 185 | 600 | 8.3 | 22 | 0.55 |
| NCM-14 | LiNi_{0.83}Co_{0.07}Mn_{0.2}O₂ | 224 | 600 | 8.3 | 22 | 0.55 |
| NCM-15 | LiNi_{0.65}Co_{0.07}Mn_{0.28}O₂ | 195 | 600 | 8.3 | 22 | 0.2 |
| NCM-16 | LiNi_{0.65}Co_{0.07}Mn_{0.28}O₂ | 195 | 600 | 8.3 | 22 | 1.2 |
| NCM-17 | LiNi_{0.65}Co_{0.07}Mn_{0.28}O₂ | 195 | 600 | 8.3 | 22 | 1.5 |
| NCM-18 | LiNi_{0.65}Co_{0.07}Mn_{0.28}O₂ | 195 | 1200 | 8.3 | 22 | 0.55 |
| NCM-19 | LiNi_{0.65}Co_{0.07}Mn_{0.28}O₂ | 195 | 50 | 8.3 | 22 | 0.55 |
| NCM-20 | LiNi_{0.65}Co_{0.07}Mn_{0.28}O₂ | 195 | 800 | 8.3 | 22 | 0.55 |
| NCM-21 | LiNi_{0.65}Co_{0.07}Mn_{0.28}O₂-monocrystalline | 201 | 600 | 3 | 15 | 0.61 |

NCM-21 was in the form of monocrystalline particles, and the others were all in the form of polycrystalline particles.

Composition of the positive electrode material composition in each of examples and comparative examples was shown in Table 2 (where a percentage of LMFP was a mass percentage in LMFP and NCM).

**Table 2**

| | Number of LMFP | Number of NCM | Percentage of LMFP (%) | Aα+B(1-α) |
|---|---|---|---|---|
| Example 1 | LMFP-1 | NCM-1 | 97 | 8.88 |
| Example 2 | LMFP-1 | NCM-1 | 90 | 8.84 |
| Example 3 | LMFP-1 | NCM-1 | 80 | 8.78 |
| Example 4 | LMFP-1 | NCM-1 | 70 | 8.72 |
| Example 5 | LMFP-1 | NCM-1 | 50 | 8.6 |
| Example 6 | LMFP-2 | NCM-1 | 80 | 7.42 |
| Example 7 | LMFP-3 | NCM-1 | 80 | 12.86 |
| Example 8 | LMFP-4 | NCM-1 | 80 | 48.46 |
| Example 9 | LMFP-5 | NCM-1 | 80 | 55.42 |
| Example 10 | LMFP-6 | NCM-1 | 80 | 5.74 |
| Example 11 | LMFP-7 | NCM-1 | 80 | 8.78 |
| Example 12 | LMFP-8 | NCM-1 | 80 | 8.78 |
| Example 13 | LMFP-9 | NCM-1 | 80 | 8.78 |
| Example 14 | LMFP-10 | NCM-1 | 80 | 8.78 |
| Example 15 | LMFP-11 | NCM-1 | 80 | 8.78 |
| Example 16 | LMFP-12 | NCM-1 | 80 | 8.78 |
| Example 17 | LMFP-13 | NCM-1 | 80 | 8.78 |
| Example 18 | LMFP-14 | NCM-1 | 80 | 8.78 |
| Example 19 | LMFP-15 | NCM-1 | 80 | 8.78 |
| Example 20 | LMFP-16 | NCM-1 | 80 | 8.78 |
| Example 21 | LMFP-17 | NCM-2 | 80 | 8.12 |
| Example 22 | LMFP-17 | NCM-3 | 80 | 9.36 |
| Example 23 | LMFP-17 | NCM-4 | 80 | 10.04 |
| Example 24 | LMFP-17 | NCM-5 | 80 | 7.98 |
| Example 25 | LMFP-17 | NCM-6 | 80 | 8.78 |
| Example 26 | LMFP-17 | NCM-7 | 80 | 8.78 |
| Example 27 | LMFP-17 | NCM-8 | 80 | 8.78 |
| Example 28 | LMFP-17 | NCM-9 | 80 | 8.78 |
| Example 29 | LMFP-17 | NCM-10 | 80 | 8.78 |
| Example 30 | LMFP-17 | NCM-11 | 80 | 8.78 |
| Example 31 | LMFP-17 | NCM-12 | 80 | 8.78 |
| Example 32 | LMFP-17 | NCM-13 | 80 | 8.78 |
| Example 33 | LMFP-17 | NCM-14 | 80 | 8.78 |
| Example 34 | LMFP-17 | NCM-15 | 80 | 8.78 |
| Example 35 | LMFP-17 | NCM-16 | 80 | 8.78 |
| Example 36 | LMFP-17 | NCM-17 | 80 | 8.78 |
| Example 37 | LMFP-17 | NCM-18 | 80 | 8.78 |
| Example 38 | LMFP-17 | NCM-19 | 80 | 8.78 |
| Example 39 | LMFP-17 | NCM-20 | 80 | 8.78 |
| Example 40 | LMFP-18 | NCM-1 | 80 | 8.78 |
| Comparative example 1 | LMFP-1 | - | 100 | 8.9 |
| Comparative example 2 | LMFP-1 | NCM-1 | 20 | 8.42 |
| Comparative example 3 | -- | NCM-1 | 100 | 4.15 |
| Comparative example 4 | LMFP-1 | NCM-21 | 80 | 7.72 |

The electrical performance was tested in the following method.

### (1) Preparation of laminated battery with mixed electrode

Preparation of mixed positive electrode: A-type and B-type materials in the foregoing examples and comparative examples as positive electrode active materials (mixed at a mass ratio of the two, where mA+mB=100%), poly(vinylidene difluoride) (PVDF), conductive carbon were added to a specified amount of N-methylpyrrolidone (NMP), where a mass ratio of the active materials, PVDF, and conductive carbon was 90:5:5. The resulting mixture was stirred in a drying room to prepare a uniform slurry, with a viscosity controlled to 3000-10000 mPa·S. Then, the slurry was applied onto an aluminum foil, followed by drying and cold pressing, to prepare a positive electrode plate.

Preparation of graphite negative electrode: Artificial graphite as a negative electrode active material, sodium carboxymethyl cellulose (CMC), conductive carbon, and styrene-butadiene rubber (SBR) were added to a specified amount of deionized water at a mass ratio of 94:1.5:2:2.5. The resulting mixture was stirred in a drying room to prepare a uniform slurry, with a viscosity controlled to 2000-12000 mPa·S. Then, the slurry was applied onto a copper foil. A negative electrode coating mass referred to a matching relationship with a positive electrode (94%*negative electrode coating mass*graphite gram capacity=1.15*90%*positive electrode coating mass*gram capacity of mixed positive electrode, where the gram capacity referred to information of a gram capacity at the third cycle of powder of a lithium half battery with the material). Then, drying and cold pressing were performed to prepare a negative electrode plate.

An electrolyte was formed by LiPF₆ at a concentration of 1 mol/L/(ethylene carbonate (EC)+diethyl carbonate (DEC)+dimethyl carbonate (DMC)) (at a volume ratio of 1:1:1)+5wt% fluoroethylene carbonate (FEC).

A polyethylene (PE) porous polymer film was used as a separator.

Processes such as punching electrode plates/washing tabs/stacking/welding/top sealing/electrolyte injection/pre-formation/degassing/formation/shaping were performed in a drying room to assemble a laminated cell for testing.

### (2) Test of initial gram capacity of laminated battery

At a constant temperature of 25°C, the laminated battery prepared above was left standing for 5 min and then discharged to 2.5 V at 1/3C. Then, after left standing for 5 min, the battery was constant-voltage charged to 4.3 V or 4.25 V at a constant current of 1/3C (the percentage of Ni was greater than 70%, and an upper limit voltage was 4.25 V), then charged at a constant voltage of 4.3 V or 4.25 V until the current was less than or equal to 0.05 mA, and then left standing for 5 min. A charge capacity at that point was denoted as C0. Then, the battery was discharged to 2.5 V at 1/3C0. A discharge capacity at that point was an initial discharge capacity denoted as D0.

The tested discharge capacity value (that was the initial discharge capacity D0) was divided by a mass of the positive electrode active material in the secondary battery to obtain an initial gram capacity of the positive electrode active material in a fully-charged state.

### (3) Test of cycling performance of secondary battery at 25°C

At a constant temperature of 25°C and under 2.5-4.3 V or 4.25V, each secondary battery prepared above was charged to 4.3 V or 4.25 V at 0.5C0, then charged at a constant voltage of 4.3 V or 4.25 V until the current was less than or equal to 0.05 mA, and then left standing for 5 min. Then, the battery was discharged to 2.5 V at 0.5C. A capacity was noted as Dn (n=1, 2, 3...). The above operations were repeated, and more than 5000 cycles were performed. A capacity fading (fading) value was tested. During capacity fading, a ratio of Dn/D3 was used as state of health (State of health, SOH) of a cell. The numbers of cycles of cells when their capacities faded to 80% SOH were compared and used as evaluation indicators for their cycling capabilities.

### (4) Test of charge capacity:

A pouch laminated battery was first subjected to a capacity test in the following process: The battery was charged to a full charge voltage V1 at a constant current of 0.33C and then charged at a constant voltage. When the charge current dropped to 0.05C, the constant-voltage charging ended. Then, the battery was discharged to a full discharge voltage V2 at 0.33C. The process was repeated 3 times. A capacity result at the third cycle was used as a final result, and the result at the third cycle could be used for calculating a gram capacity of the positive electrode.

Charging tests at different rates (C1<C2<C3<C4<...<Cn) were performed on the pouch stacked battery. During testing, charge rates needed to increase from low to high. During charging, both a voltage of the pouch stacked battery in a fully-charged state and a voltage of the negative electrode of the pouch stacked battery needed to be monitored. The detailed process was as follows: the pouch stacked battery was charged at C1 to a full charge voltage V1 or a negative electrode voltage 0V, and an SOC value of the battery at the end of charging was extracted. Then, the battery was discharged at 0.33C to a full discharge voltage V2. The above process was repeated to obtain SOC values at the end of charging at different rates, where Cn at which the battery was charged to 100% SOC was a charge capacity of the cell in this scheme.

### (5) Test of low-temperature discharge capacity

At a constant temperature of 25°C, the battery was left standing for 30 minutes and then discharged to a lower cut-off voltage of 2.5 V at a constant current of 0.33C. Then, the battery was left standing for 5 minutes and then charged to an upper cut-off voltage (4.4 V) at a constant current of 0.33C. Then, the battery was charged at constant voltage until the current was less than 0.05C. Then, after left standing for 5 minutes, the battery was discharged to a lower cut-off voltage of 2.5 V at a constant current of 0.33C. A discharge capacity at that point was recorded as an initial discharge capacity C0.

At 5°C, the battery undergone the operations in the above process, and a discharge capacity Cn was recorded. A discharge capacity retention rate of the battery at a low temperature of -5°C was calculated according to the following formula.

Low-temperature discharge capacity=100%×Cn/C0.

The test results were recorded in Table 3.

**Table 3**

| Example | Initial gram capacity (mAh/g) | Charge capacity | Discharge capacity | Cycle life at 25°C @ 80% SOH |
|---|---|---|---|---|
| Example 1 | 155 | 0.63 | 37% | 3500 |
| Example 2 | 158 | 1.16 | 42% | 3850 |
| Example 3 | 162 | 1.92 | 50% | 4000 |
| Example 4 | 166 | 2.68 | 57% | 2950 |
| Example 5 | 175 | 4.20 | 72% | 2300 |
| Example 6 | 163 | 1.76 | 48% | 3310 |
| Example 7 | 161 | 1.76 | 48% | 3240 |
| Example 8 | 157 | 0.88 | 39% | 2670 |
| Example 9 | 155 | 0.80 | 39% | 2580 |
| Example 10 | 157 | 1.04 | 41% | 2400 |
| Example 11 | 162 | 1.28 | 43% | 2870 |
| Example 12 | 162 | 1.73 | 48% | 3130 |
| Example 13 | 162 | 1.76 | 48% | 3200 |
| Example 14 | 162 | 1.14 | 42% | 2830 |
| Example 15 | 162 | 1.18 | 42% | 2790 |
| Example 16 | 162 | 0.98 | 40% | 1500 |
| Example 17 | 162 | 1.07 | 40% | 3310 |
| Example 18 | 162 | 1.02 | 41% | 3340 |
| Example 19 | 162 | 0.88 | 39% | 2440 |
| Example 20 | 162 | 0.96 | 40% | 2230 |
| Example 21 | 162 | 1.04 | 41% | 2790 |
| Example 22 | 162 | 1.06 | 41% | 2840 |
| Example 23 | 162 | 0.95 | 40% | 2310 |
| Example 24 | 162 | 0.97 | 40% | 2480 |
| Example 25 | 156 | 4.33 | 73% | 1583 |
| Example 26 | 160 | 5.31 | 83% | 3450 |
| Example 27 | 161 | 4.2 | 72% | 3728 |
| Example 28 | 163 | 1.42 | 45% | 3581 |
| Example 29 | 164 | 1.51 | 46% | 2890 |
| Example 30 | 165 | 0.97 | 40% | 2670 |
| Example 31 | 161 | 5.99 | 90% | 2980 |
| Example 32 | 160 | 6.13 | 91% | 2678 |
| Example 33 | 168 | 1.47 | 45% | 2620 |
| Example 34 | 163 | 1.61 | 47% | 2641 |
| Example 35 | 163 | 1.77 | 48% | 2633 |
| Example 36 | 163 | 1.92 | 50% | 2151 |
| Example 37 | 162 | 2.24 | 53% | 2402 |
| Example 38 | 162 | 1.968 | 50% | 2780 |
| Example 39 | 162 | 2.08 | 51% | 2795 |
| Example 40 | 162 | 2.4 | 54% | 4200 |
| Comparative example 1 | 154 | 0.40 | 35% | 3400 |
| Comparative example 2 | 187 | 6.48 | 95% | 1500 |
| Comparative example 3 | 232 | 0.3 | 34% | 610 |
| Comparative example 4 | 163 | 0.4 | 31% | 3759 |

From the comparison of Examples 1 to 5 in the above table, it can be seen that as the phosphate-based positive electrode material decreases, the cycle life is prolonged first and then shortened. This is because the cycling performance of the phosphate-based positive electrode material itself is related to the ternary positive electrode material. When the phosphate-based positive electrode material is mixed with ternary positive electrode material at an appropriate ratio, lithium and iron assist the cycling performance stability of the ternary positive electrode material. Thus, when the percentage of the phosphate-based positive electrode material in the mixture of the two is higher than 80%, the cycle life of the battery is further prolonged. As the percentage of the phosphate-based positive electrode material increases, the charge and discharge capacities of the battery gradually increase.

From the comparison of Examples 6 to 16 and 21 to 24 with Example 1, it can be seen that when Dᵥ50 of the phosphate-based positive electrode material is controlled within a range of 7-30 µm, or when the particle size of primary particles of the phosphate-based positive electrode material is controlled to be 35-110 nm, or when the Dᵥ50 of the ternary positive electrode material is controlled to be 5-11 µm, the battery can achieve high charge capacity and discharge capacity.

From the comparison of Examples 17 to 20 and 34 to 26 with Example 1, it can be seen that whether the BET specific surface area of the phosphate-based positive electrode material changes or the BET specific surface area of the ternary positive electrode material changes, the charge and discharge capacities and cycling performance of the battery are affected. When the BET specific surface areas of the phosphate-based positive electrode material and the ternary positive electrode material are excessively large, the cycling performance and charge capacity are significantly reduced.

From the comparison of Examples 25 to 33 with Example 1, it can be seen that the molar percentage of Ni significantly affects the increase of the energy density of a mixed material. The molar percentage of Co improves the electronic conductivity and ionic conductivity of a system and can effectively improve the charge and discharge capacities of the positive electrode material.

Although this application has been described with reference to the preferred embodiments, various modifications to this application and replacements of the components therein with equivalents can be made without departing from the scope of this application. In particular, as long as there is no structural conflict, the various technical features mentioned in the implementations can be combined in any manner. This application is not limited to the specific embodiments disclosed in this specification but includes all technical solutions falling within the scope of the claims.

## Claims

1. A positive electrode material composition, comprising a phosphate-based positive electrode material and a ternary positive electrode material, wherein a weight of the phosphate-based positive electrode material is denoted as W1; a weight of the ternary positive electrode material is denoted as W2; α=W1/(W1+W2), wherein 50%≤α≤97%, optionally 70%≤α≤90%; and the phosphate-based positive electrode material is a polycrystalline secondary sphere material and/or the ternary positive electrode material is a polycrystalline secondary sphere material.

2. The positive electrode material composition according to claim 1, wherein a particle size distribution of the positive electrode material composition satisfies the following relational expression: 14>Aα+B(1-α)>7, wherein A represents Dᵥ50 of the phosphate-based positive electrode material, and B represents Dᵥ50 of the ternary positive electrode material.

3. The positive electrode material composition according to claim 1 or 2, wherein a particle size of primary particles of the phosphate-based positive electrode material is 10-600 nm, optionally 35-110 nm; and optionally, a laser particle size Dᵥ50 of the phosphate-based positive electrode material is 7-30 µm, Dᵥ50 is optionally 8-14 µm, and Dᵥ90<30 µm.

4. The positive electrode material composition according to any one of claims 1 to 3, wherein a BET specific surface area of the phosphate-based positive electrode material is 8-20 m²/g.

5. The positive electrode material composition according to any one of claims 1 to 4, wherein a chemical formula of the phosphate-based positive electrode material is Li₁₊ₓMn_{1-y}A_{y}P_{1-z}R_{z}O₄, wherein in the chemical formula, x is any value in a range of -0.100 to 0.100, y is any value in a range of 0.001 to 0.500, z is any value in a range of 0.001 to 0.100, and the values of x, y, and z satisfy the following condition: the chemical formula remains electrically neutral; A is one or more elements selected from Zn, Al, Na, K, Mg, Mo, W, Ti, V, Zr, Fe, Ni, Co, Ga, Sn, Sb, Nb, and Ge, optionally one or more elements selected from Fe, Ti, V, Ni, Co, and Mg; R is one or more elements selected from B, Si, N, S, F, Cl, and Br; and optionally, R is one element selected from B, Si, N, and S; or
the chemical formula of the phosphate-based positive electrode material is LiₐAₓMn_{1-y}B_{y}P_{1-z}C_{z}O₄₋ₙDₙ, wherein A comprises one or more elements selected from a group consisting of Zn, Al, Na, K, Mg, Nb, Mo, and W; B comprises one or more elements selected from a group consisting of Ti, V, Zr, Fe, Ni, Mg, Co, Ga, Sn, Sb, Nb, and Ge; C comprises one or more elements selected from a group consisting of B (boron), S, Si, and N; D comprises one or more elements selected from a group consisting of S, F, Cl, and Br; a is selected from a range of 0.9 to 1.1; x is selected from a range of 0.001 to 0.1; y is selected from a range of 0.001 to 0.5; z is selected from a range of 0.001 to 0.1; n is selected from a range of 0.001 to 0.1; and the phosphate-based positive electrode material is electrically neutral.

6. The positive electrode material composition according to claim 5, wherein the phosphate-based positive electrode material comprises a polycrystalline core and a coating layer covering the polycrystalline core; the polycrystalline core comprises a material having the chemical formula Li₁₊ₓMn_{1-y}A_{y}P_{1-z}R_{z}O₄ or the chemical formula LiₐAₓMn_{1-y}B_{y}P_{1-z}C_{z}O₄₋ₙDₙ; and the coating layer optionally comprises one or more of a pyrophosphate layer, a phosphate layer, and a carbon layer.

7. The positive electrode material composition according to any one of claims 1 to 6, wherein Dᵥ50 of the ternary positive electrode material is 5-11 µm, and Dᵥ99≤30 µm; and optionally, an average particle size of primary particles of the ternary positive electrode material is 50-800 nm.

8. The positive electrode material composition according to any one of claims 1 to 7, wherein a BET specific surface area of the ternary positive electrode material is 0.2-1.2 m²/g.

9. The positive electrode material composition according to any one of claims 1 to 8, wherein the ternary positive electrode material is an NCM ternary positive electrode material or an NCA ternary positive electrode material; optionally, a molar percentage of Ni in the ternary positive electrode material is 50%-75%, and a molar percentage of Co is 0.5%-49.5%; and further optionally, the molar percentage of Ni is 50%-70%, and the molar percentage of Co is 5%-35%.

10. The positive electrode material composition according to claim 9, wherein the ternary positive electrode material has a chemical formula Li_{a'}Ni_{b'}Co_{c'}Ml_{d'}M2_{e'}O_{f'}R'_{g'}, wherein 0.75≤a'≤1.2, 0<b'<1, 0<c'<1, 0<d'<1, 0≤e'≤0.2, 1≤f'≤2.5, 0≤g'≤1, and f+g'≤3; M1 is Mn and/or Al; M2 is one or more elements selected from Zr, Zn, Cu, Cr, Mg, Fe, V, Ti, Sr, Sb, Y, W, and Nb; and R' is one or more elements selected from N, F, S, and Cl.

11. A secondary battery, wherein the secondary battery comprises a positive electrode plate; the positive electrode plate comprises a positive electrode active material; and the positive electrode active material is the positive electrode material composition according to any one of claims 1 to 10.

12. An electric apparatus, comprising a secondary battery, wherein the secondary battery is the secondary battery according to claim 11.
